Europäisches Patentamt

European Patent Office

Office européen des brevets

(11) Veröffentlichungsnummer: **0 236 715 B1**

## (12) EUROPÄISCHE PATENTSCHRIFT

(45) Veröffentlichungstag der Patentschrift: **23.09.92**

(51) Int. Cl.5: **G01L 5/28**

(21) Anmeldenummer: **87101154.0**

(22) Anmeldetag: **28.01.87**

(54) **Verfahren und Vorrichtung zur Prüfung der Bremsen auf Bremsprüfständen für Kraftfahrzeuge.**

(30) Priorität: **05.02.86 DE 3603508**
**03.12.86 DE 3641339**

(43) Veröffentlichungstag der Anmeldung:
**16.09.87 Patentblatt 87/38**

(45) Bekanntmachung des Hinweises auf die
Patenterteilung:
**23.09.92 Patentblatt 92/39**

(84) Benannte Vertragsstaaten:
**AT DE ES FR IT NL**

(56) Entgegenhaltungen:
**DE-A- 2 518 850**
**FR-A- 2 255 588**

(73) Patentinhaber: **Maschinenbau Haldenwang GmbH & Co. KG**
**Hoyen 2**
**W-8961 Haldenwang(DE)**

(72) Erfinder: **Knestel, Anton**
**Riedleweg 4**
**W-8961 Hopferbach(DE)**

(74) Vertreter: **Patentanwälte Beetz sen. - Beetz jun. Timpe - Siegfried - Schmitt-Fumian**
**Steinsdorfstrasse 10**
**W-8000 München 22(DE)**

## Beschreibung

Die Erfindung betrifft ein Verfahren zur Prüfung der Bremsen von Kraftfahrzeugen mit mehreren ständig angetriebenen Achsen der im Oberbegriff des Patentanspruchs 1 angegebenen Gattung. Ferner bezieht sich die Erfindung auf einen Bremsprüfstand nach dem Oberbegriff des Patentanspruchs 6.

Zum Prüfen der Funktionsfähigkeit der Bremse eines Kraftfahrzeugs wird das jeweilige Fahrzeugrad auf eine angetriebene Standfläche, z. B. ein Rollenpaar, gestellt, das von einem Motor angetrieben wird. Bei Betätigen der betreffenden Radbremse wird das erzeugte Drehmoment z. B. als Rückdrehmoment des das Rollenpaar antreibenden Motors gemessen. Wenn allerdings das Kraftfahrzeug mehrere unlösbar miteinander gekoppelte angetriebene Achsen enthält, werden bei der Prüfung einer einzelnen Radbremse die Räder der am Prüfvorgang nicht beteiligten Fahrzeugachse mit abgebremst, was die Meßwerte verfälscht.

Aus der DE-OS 25 18 850 ist ein gattungsmäßes Verfahren zur Prüfung der Bremsen von Kraftfahrzeugen mit mehreren gleichzeitig angetriebenen untrennbar miteinander gekoppelten Achsen bekannt, bei welchem die auf je einem Rollenpaar abgestützten Räder einer Achse durch die gesonderten Rollenpaar-Antriebe in Drehung versetzt werden und bei welchem die von der beim Prüfvorgang betätigten Bremse aufgebrachte Bremskraft durch Erfassen eines von den Rollensatz-Antrieben aufgenommenen Drehmoments gemessen wird. Da die Rollenbzw. Walzensätze der beiden Räder einer Achse mit gleicher Geschwindigkeit und entgegengesetzter Drehrichtung angetrieben werden, sollte theoretisch auch die Drehgeschwindigkeit beider Räder gleich groß sein und die zu den weiteren angetriebenen Fahrzeugachsen führende Gelenkwelle stillstehen. In der Praxis kommt es jedoch beim Bremsvorgang zu einem Schlupf zwischen den Laufflächen der Räder und den Reibflächen der Rollensätze, was zu einer Drehgeschwindigkeits-Differenz zwischen beiden Rädern und damit zu einer Drehbewegung der Kardanwelle führt. Ähnliche Probleme ergeben sich bei der Bremsprüfung von Lastkraftwagen mit mehreren angetriebenen Achsen, die nicht voneinander getrennt werden können. Ungenaue Meßwerte werden auch dann erhalten, wenn in der die angetriebenen Achsen fest verbindenden Gelenkwelle eine Viskose-Kupplung angeordnet ist, die zwar geringfügige Drehzahldifferenzen zwischen den angetriebenen Achsen ausgleichen kann, bei den Bremsversuchen aber wie starre Kupplungen wirken.

Aus der US-PS 3 974 688 ist ein Bremsenprüfstand bekannt, auf dem die Bremsen von Kraftfahrzeugen mit herkömmlichen Achsantrieben geprüft werden. Jeweils einer Rolle jedes als Radaufstand dienenden Rollenpaares ist ein Tachogenerator zugeordnet, mit welchem die Drehzahl dieser Rolle vor und während des Bremsvorgangs erfaßt und nach einem Sollwertvergleich einem Motorregler zugeführt werden. Bei diesem bekannten Bremsenprüfstand werden Antriebsmotoren für die Rollensätze verwendet, die in ihrer Leistungsaufnahme mit Hilfe eines Rechners umgeschaltet werden können, und zwar von Sternschaltung auf Dreieckschaltung. Im Anfahrzustand, d. h. vor Betätigung der Fahrzeugbremse, werden die Antriebsmotoren im Zustand der niedrigen Drehmomentabgabe betrieben. Sobald die Rollen einen vorgegebenen prozentualen Anteil der Prüf- oder Induktions-Motordrehzahl erreicht haben, wird eine Torschaltung aktiviert und die beiden Antriebsmotoren werden in den Zustand für hohe Drehmomentabgabe umgeschaltet. Dieser Umschaltvorgang wird eingeleitet durch die auf einer Welle jedes Rollensatzes angeordneten Tachogeneratoren. Diese Drehzahlmessung der Wellen der Rollensätze liefert jedoch keine korrekte Aussage über die tatsächliche Drehgeschwindigkeit der von diesen Rollensätzen angetriebenen Fahrzeugräder, da durch ungleich abgefahrene Bereifung, unterschiedliches Reifenprofil und/oder verschieden großen Luftdruck Fehlerfaktoren unberücksichtigt bleiben.

Der Erfindung liegt die Aufgabe zugrunde, ein Verfahren zur Prüfung von Bremsen der angegebenen Gattung aufzuzeigen, bei dem die durch Schlupf bedingten Meßfehler praktisch ausgeschaltet werden.

Diese Aufgabe wird erfindungsgemäß durch die im kennzeichnenden Teil des Patentanspruchs 1 angegebenen Maßnahmen gelöst.

Da gemäß der Erfindung die Drehgeschwindigkeit der Räder während der Bremsprüfung direkt gemessen und durch Verstellen der beteiligten Rollensatz-Antriebe für beide Räder gleich groß gehalten wird, erfolgt keine Drehbewegung der über das Differential mit der Achse dieser beiden Räder antriebsmäßig verbundenen Gelenkwelle und damit auch keine Drehmomentübertragung auf die mit dieser Gelenkwelle starr gekoppelten weiteren Achsen. Die gemessenen Drehgeschwindigkeiten der Räder einer Achse werden ständig entweder mit Sollwerten oder miteinander verglichen und über die Regelung der Antriebsleistung der beiden beteiligten Rollensätze gleich groß gehalten, so daß der Einfluß des Schlupfes zwischen den Laufflächen der Räder und den Reibflächen der Rollensätze ausgeschaltet wird. Auf diese Weise kann das Bremsmoment der betätigten Radbremse störungsfrei z. B. über das am Rollensatz-Antrieb angreifende Bremsmoment ermittelt werden.

Der erfindungsgemäße Vorschlag läßt sich in verschiedener Weise verwirklichen. So kann z. B.

das Rad der zu prüfenden Bremse zur Erzielung gleicher Drehgeschwindigkeiten beider Räder einer Achse rascher angetrieben werden. Dieser schnellere Antrieb führt jedoch nicht zu einer größeren Drehgeschwindigkeit dieses Rades, weil das Rad bei Antrieb nur den Schlupf ausgleicht, mit dem das Rad gegenüber seinem Antrieb zurück bleibt.

Bei einer anderen Variante der Erfindung ist vorgesehen, daß das gegenläufig angetriebene, der nicht zu prüfenden Achse zugehörige Rad, zur Erzielung gleicher Drehgeschwindigkeiten langsamer angetrieben wird, oder auch, daß beide Räder der Achse der zu prüfenden Bremse mit einer gleichen etwa mittleren Drehgeschwindigkeit angetrieben werden.

Die Drehgeschwindigkeit kann beispielsweise die Umfangsgeschwindigkeit sein, die durch eine Tastrolle am Umfang des Rades gemessen wird. Ein unterschiedlicher Reifenluftdruck oder unterschiedlich abgefahrene Reifen beeinträchtigen jedoch die Meßergebnisse.

Es wird daher ferner vorgeschlagen, daß die Raddrehwinkel-Geschwindigkeiten beider Räder gemessen, verglichen und zur Nachregelung benützt werden.

Es ist gefunden worden, daß die Messung der Geschwindigkeit des Raddrehwinkels verhältnismäßig einfach zu verwirklichen ist und sehr genaue Ergebnisse liefert. Es ist klar, daß die Messung des Raddrehwinkels völlig unabhängig ist von Zufälligkeiten des Radzustandes, wie z.B. dem unterschiedlichen Abrieb oder dem unterschiedlichen Luftdruck.

Die Messung des Raddrehwinkels läßt sich beispielsweise dadurch verwirklichen, daß an den Rädern umlaufende Markierungen angebracht werden, deren Umlaufzeit gemessen wird.

Die Raddrehwinkelmessung kann an Stelle der Drehgeschwindigkeitsmessung am Radumfang angewandt werden. Besser ist es jedoch, wie die Erfindung weiter vorschlägt, wenn die Raddrehwinkelmessung zusätzlich zur Drehgeschwindigkeitsmessung angewandt wird, die die Drehgeschwindigkeit z.B. durch Tastrollen am Radumfang ermittelt. Eine Kombination bzw. Überlagerung beider Meßergebnisse läßt sich ohne weiteres realisieren, und führt sehr rasch zu einem Zustand, bei dem deutlich wird, daß in das Meßsystem keine Drehmomente über die Kardanwelle eingeleitet werden. Es wurde gefunden, daß schon nach wenigen Sekunden bei entsprechendem Spiel der Kardanwelle, die die Kardanwelle aufnehmenden Elemente am Differential hin- und hergehende Pendelbewegungen ausführen.

Diese Erscheinung zeigt, daß über den Kardanwellenanschluß keinerlei Drehmomente mehr eingeleitet werden, bzw. die eingeleiteten Drehmomente weit unterhalb der Meßgenauigkeit liegen, und jeweils um den Betrag Null pendeln. Auch bei demontierter Kardanwelle tritt dann am Kardanwellenanschluß des Differentials keine Drehbewegung mehr auf.

Die erfindungsgemäße Vorrichtung zur Durchführung des beschriebenen Verfahrens ist dadurch gekennzeichnet, daß die beiden Räder der Achse mit Drehgeschwindigkeits-Meßeinrichtungen zusammenwirken, die getrennt sind von den Antriebeinrichtungen dieser Räder, und daß bei Differenzen der gemessenen Drehgeschwindigkeit zur Drehgeschwindigkeit des anderen Rades ein Regler die Drehgeschwindigkeit eines oder beider Räder verändert.

Besonders günstig ist es, wenn an den Rädern der Achse der zu prüfenden Bremse eine Markierung befestigt ist, die mit einem Wege- bzw. Lageaufnehmer zusammenwirkt. Insbesondere ist die Markierung als Reflektor ausgebildet, der einen Lichtimpuls einem Sensor zuleitet.

Hier zeigt sich ein wesentlicher Vorteil. Es ist nicht notwendig, beispielsweise am Rad mehrere Markierungen anzubringen, die einen exakten Winkelabstand voneinander aufweisen. Vielmehr genügt es, eine einzige Markierung vorzusehen, und vorzugsweise einen Umlauf dieser Markierung zeitlich zu messen.

Dieser Vorteil vereinfacht die Anwendung des erfindungsgemäßen Verfahrens entscheidend. Es kommt nicht auf die Lage der Markierung am Umfang an, so daß aufwendige Ausrichtarbeiten, Messungen usw. in diesem Zusammenhang entfallen.

In der Zeichnung ist ein Ausführungsbeispiel der Erfindung schematisch dargestellt. Es zeigen:

Fig. 1 eine Draufsicht auf einen Bremsprüfstand, mit einer Vorrichtung gemäß der Erfindung während einer Bremsprüfung und

Fig. 2 ein Blockschaltbild zur Verwirklichung des erfindungsgemäßen Verfahrens.

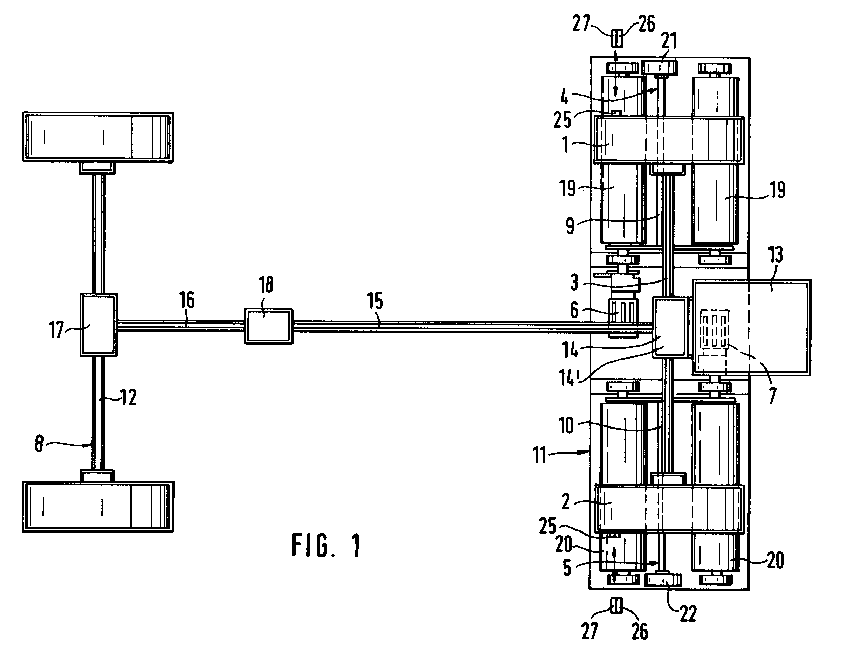

In der Fig. 1 steht das Fahrzeug 8, dessen Bremse zu prüfen ist, mit seiner Vorderachse 3 auf dem Bremsprüfstand 11. Zur Verbesserung der Darstellung sind dabei die schematisch wiedergegebenen Teile des Fahrzeuges 8 in doppelten Linien gezeichnet. Der Antriebsmotor 13 treibt über das Getriebe 14' die Vorderachse 3 an, wobei das Getriebe 14' gleichzeitig auch das Differential 14 der Vorderachse 3 umfaßt. Über die Kardanwellen 15 und 16 wird das Differential 17 der Hinterachse 12 angetrieben, deren Räder bei der gezeigten Bremsprüfung auf dem Erdboden stehen. Die Kardanwellen 15 und 16 sind durch eine Viskosekupplung 18 gekuppelt, die am Fahrbetrieb geringfügige Drehzahlunterschiede zwischen der Vorderachse 3 und der Hinterachse 12 ausgleichen kann, die sich jedoch bei größeren Differenzen wie eine starre Kupplung verhält.

Das linke Rad 1 der Vorderachse 3 steht im Bremsprüfstand 11 auf den beiden Rollen 19, das rechte Rad 2 auf den beiden Rollen 20.

Das Rollenpaar 19 und das Rollenpaar 20 sind je für sich getriebemäßig verbunden. Das Rollenpaar 19 wird von dem Antriebsmotor 6 in das Rollenpaar 20 vom Antriebsmotor 7 angetrieben. Die Prüfung der Bremskraft erfolgt durch die Messung des Rückdrehmomentes, das beim Bremsen am Motor 6 oder am Motor 7 auftritt. Eine derartige Einrichtung ist beispielsweise beschrieben in der DE-A1 27 33 639.

An Stelle der Rollenpaare 19 bzw. 20 können auch andere Anordnungen vorgesehen sein, z.B. bewegliche Bänder. Im allgemeinen werden aber Rollenpaare bevorzugt.

Zwischen den Rollen 19 bzw. den Rollen 20 ist je eine Tastrolle 9 bzw. 10 angeordnet. Die Höhenlage der Tastrollen 9 und 10 wird durch Federn bestimmt, so daß diese Tastrollen 9 und 10 am Umfang der Räder 1 bzw. 2 anliegen. Die Tastrollen 9 bzw. 10 treiben jeweils Tachogeneratoren 21 bzw. 22 an, so daß auf diese Weise Drehgeschwindigkeitsmeßeinrichtungen 4 und 5 erhalten werden, die die Umfangsgeschwindigkeit der Räder 1 bzw. 2 messen. Zu beachten ist hierbei, daß die Drehrichtungen, mit der die Räder 1 bzw. 2 angetrieben sind, gegenläufig sind, um zu erreichen, daß das Differential 14 kein Drehmoment auf die Kardanwelle 15 ausübt.

An jedem der beiden Räder 1 und 2 des zu prüfenden Fahrzeugs 8, sind Markierungen in Form von Reflektoren 25 befestigt. Solche Reflektoren können beispielsweise auf die Decke des betreffenden Reifens nach oberflächlicher Reinigung aufgeklebt werden. Die Reflektoren bestehen, wie an sich bekannt, aus wabenartig angeordneten Spiegelflächen, wobei immer drei Spiegelflächen sich zu einer Pyramide ergänzen. Die Winkel zwischen den Flächen der einzelnen Spiegel betragen 90 ° mit der Wirkung, daß ein Lichtstrahl der Lichtquelle 27, der auf einen solchen Reflektor fällt, in Richtung der Lichtquelle 27 auf den Sensor 26 zurückgespiegelt wird.

Die Anordnung der Reflektoren 26 an den Rädern 1 bzw. 2, kann an beliebiger Stelle erfolgen, ohne den Meßvorgang entscheidend zu verändern. Günstig ist es jedoch, wenn die Anordnung am Rad 1 und am Rad 2 gleichartig gewählt wird, bezüglich des Sensors 26 bzw. der Lichtquelle27. Dadurch läßt sich der zeitliche Ablauf bis zur völligen Einregelung verkürzen.

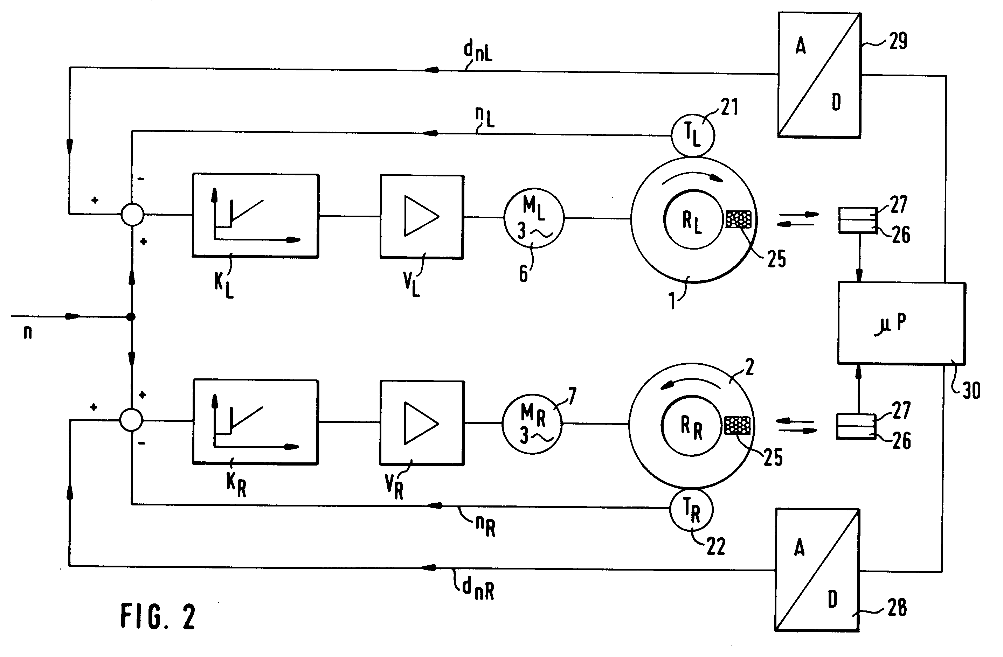

Die Fig. 2 zeigt das Blockschaltbild des erfindungsgemäßen Verfahrens. Die eingetragenen Indizes R und L bezeichnen jeweils das rechte bzw. linke Rad. Die Drehzahl-Soll-Vorgabe ist mit z bezeichnet, die Regler mit $K_L$ bzw. $K_R$, die Stellglieder mit $V_L$ und $V_R$, und die Rollenantriebsmotoren mit

$M_L$ bzw. $M_R$. Die beiden Räder $R_L$ und $R_R$ sind gegenläufig angetrieben, und die Tastrollentachometer bzw. Tachogeneratoren sind mit $T_L$ und $T_R$ bezeichnet.

Die Tastrollentachometer $T_L$ bzw. $T_R$, die den Tachogeneratoren 21 bzw. 22 bei der Darstellung der Fig. 1 entsprechen, messen die jeweiligen Radumfangsgeschwindigkeiten n und führen sie den jeweiligen Reglern zu.

Der Anfahrvorgang der erfindungsgemäßen Vorrichtung wird durch diese Meßwerte und die Sollwerte maßgeblich bestimmt. Sind beide Räder auf annähernd gleichen Drehzahlen eingeregelt, so wird im weiteren die Raddrehwinkel-Regelung wirksam. Im gezeigten Ausführungsbeispiel dienen dabei als Markierung an den Rädern 1 bzw. 2 die Reflektoren 25, die den Lichtstrahl der Quelle 27 jeweils zum Sensor 26, also den Meßwertaufnehmern, reflektieren. An Stelle dieser optisch wirkenden Anordnung können aber auch elektrische, mechanische oder elektromechanische Weg- oder Lageaufnehmer angewandt werden. Es wurde jedoch gefunden, daß die optisch ausgestaltete Anordnung mit einfachen Mitteln ein störungsfreies Arbeiten ergibt.

Die Erfindung sieht insbesondere vor, daß die Lichtquelle 27 Lichtimpulse aussendet, wobei dann durch an sich bekannte geeignete Vorrichtungen die Zeit bez. die Impulszahl ermittelt wird, die vergeht, bis der Reflektor eine vollständige Umdrehung ausgeführt hat. Der Mikro-Prozessor 30 verarbeitet die Signale und vergleicht die beiden Zeiten bzw. Impulszahlen miteinander, und gibt digitale Größen aus, die nach einer Digital-Analog-Umwandlung in den Umwandlern 28 bzw. 29 den jeweiligen Regelgrößen dn der beiden Radregelkreise derart beigemischt werden, daß die Dreh- bzw. Phasenwinkelunterschiede schnellstmöglichst zu Null geregelt werden.

Es ist klar, daß im ungünstigsten Falle die beiden Reflektoren 25 um 180 ° gegeneinander verdreht sind. Durch die Nachregelung wird aber dieser Phasenwinkelunterschied zum Verschwinden gebracht. Existiert kein Phasenwinkelunterschied mehr, stimmen die Zeiten bzw. Impulszahlen für eine volle Umdrehung der Reflektoren völlig überein. Ist dieser Zustand erreicht, der z.B. durch ein elektronisch ausgelöstes Signal optisch oder akustisch angezeigt wird, kann der Bremsversuch durchgeführt werden. Es wurde gefunden, daß auch im ungünstigsten Falle weit weniger als eine halbe Minute vergeht, bis der Phasenwinkelunterschied Null ist.

Während des Bremsvorganges, der in herkömmlicher Weise erfolgt, bleibt die Regelung bestehen. Es ist klar, daß während des Bremsvorganges wieder ein Phasenwinkelunterschied auftreten kann, der aber sofort wieder ausgeregelt wird. Versuche haben ergeben, daß sich keine Messunterschiede feststellen lassen, wenn zum Vergleich Bremsversuche mit demontierter Kardanwelle vorgenommen werden. Dies zeigt, daß auf die beschriebene Weise im Ergebnis während des Bremsversuches die Funktion der Kardanwelle insofern eleminiert ist, als über die Kardanwelle keinerlei Drehmomente in die zu prüfende Achse eingeleitet werden.

Im gleichen Prüfvorgang kann bei gegenläufig angetriebenen Rädern nur das eine Rad in der normalen Drehrichtung bezüglich seiner Bremse überprüft werden. Zur Überprüfung der Bremse des anderen Rades einer Achse sind die Drehrichtungen umzukehren.

**Patentansprüche**

1. Verfahren zur Prüfung der Bremsen von Kraftfahrzeugen mit mehreren miteinander unlösbar gekoppelten angetriebenen Achsen (3, 12) und je einem Differential (14, 17) in jeder Achse, bei dem die von Rollenpaaren (19, 20) eines Bremsenprüfstands gegensinnig angetriebenen Räder (1, 2) zumindest einer Achse beim Prüfvorgang einzeln abgebremst und die Bremswirkung dieser Bremse am Antrieb des Rollensatzes dieses Rades erfaßt wird, **dadurch gekennzeichnet,** daß während des Bremsvorganges die Drehgeschwindigkeit der angetriebenen Räder direkt gemessen und durch Steuerung der Antriebe der diese Räder antreibenden Rollensätze gleich groß gehalten wird.

2. Verfahren nach Anspruch 1, dadurch gekennzeichnet, daß die Umfangsgeschwindigkeit der Räder gemessen wird.

3. Verfahren nach Anspruch 1, dadurch gekennzeichnet, daß die Raddrehwinkelgeschwindigkeiten beider Räder gemessen, verglichen und zur Nachregelung benützt werden.

4. Verfahren nach Anspruch 3, dadurch gekennzeichnet, daß an den Rädern umlaufende Markierungen angebracht werden, deren Umlaufzeit gemessen wird.

5. Verfahren nach Anspruch 2 und 3, dadurch gekennzeichnet, daß die Raddrehwinkel-Messung zusätzlich zur Umfangsgeschwindigkeits-Messung angewendet wird, die die Drehgeschwindigkeit z.B. durch Tastrollen am Radumfang ermittelt.

6. Bremsprüfstand zur Prüfung der Bremsen von Kraftfahrzeugen mit mehreren miteinander unlösbar gekuppelten angetriebenen Achsen, (3, 12) bestehend aus zwei gegensinnig antreibbaren Rollensätzen (19, 20), aus je einem Antrieb (6, 7) für jeden Rollensatz und aus einer jedem Rollensatz-Antrieb zugeordneten Meßeinrichtung (21, 22) für die von der zu prüfenden Bremse erzeugte Bremswirkung, **dadurch gekennzeichnet,** daß beiden Rädern (1, 2) der jeweiligen Achse (3) je eine von den Rollensatz-Antrieben (6, 7) gesonderte Drehgeschwindigkeits-Meßeinrichtung (4, 5) zugeordnet ist und daß mindestens ein mit der Drehgeschwindigkeits-Meßeinrichtung (4, 5) gekoppelter Regler mit mindestens einem der Rollensatz-Antriebe (6, 7) verbunden ist, der bei Differenzen der Drehgeschwindigkeit der Räder (1, 2) die Antriebsleistung der Rollensatz-Antriebe (6, 7) so verändert wird, daß die Drehgeschwindigkeit der angetriebenen Räder gleich groß gehalten wird.

7. Vorrichtung nach Anspruch 6, dadurch gekennzeichnet, daß die Drehgeschwindigkeitsmeßeinrichtung am Umfang des Rades (1, 2) angeordnete Tastrollen (9, 10) aufweist.

8. Vorrichtung nach Anspruch 6, dadurch gekennzeichnet, daß an den Rädern (1, 2) der Achse (3) der zu prüfenden Bremse, eine Markierung (25) befestigt ist, die mit einem Wege- bzw. Lageaufnehmer (26) zusammenwirkt.

9. Vorrichtung nach Anspruch 8, dadurch gekennzeichnet, daß die Markierung (25) ein Reflektor ist, der einen Lichtimpuls einem Sensor (26) zuleitet.

**Claims**

1. A method of testing the brakes of motor vehicles having a plurality of powered axles (3, 12) non-detachably coupled to each other and a respective differential (14, 17) in each axle, in which the wheels (1, 2) of at least one axle which are oppositely driven by pairs of rollers (19, 20) of a brake test stand are individually braked during the testing operation and the braking effect of said brake is sensed at the drive means of the set of rollers for said wheel, **characterized in** that during the braking operation the rotational speed of the driven wheels is measured directly and is kept at an equal level by controlling the drive means of the sets of rollers which drive said wheels.

**2.** The method as claimed in claim 1, characterized in that the circumferential speed of the wheels is measured.

**3.** The method as claimed in claim 1, characterized in that the wheel rotation angle speeds of both wheels are measured, compared and used for correction.

**4.** The method as claimed in claim 3, characterized in that revolving marks are attached to said wheels and their time of revolution is measured.

**5.** The method as claimed in claim 2 and claim 3, characterized in that wheel rotation angle measurement is applied in addition to circumferential speed measurement which determines the rotational speed, for instance, by sensing rollers on the wheel circumference.

**6.** A brake test stand for testing the brakes of motor vehicles having a plurality of powered axles (3, 12) nondetachably coupled to each other, said brake test stand comprising
two oppositely drivable sets of rollers (19, 20),
a respective drive means (6, 7) for each set of rollers, and
measuring means (21, 22) associated with each roller set drive means for measuring the braking effect generated by the brake to be tested,
**characterized in**
that both wheels (1, 2) of the respective axle (3) each have a rotational speed measuring means (4, 5) associated therewith which is separate from said roller set drive means (6, 7), and
that at least a regulator coupled to said rotational speed measuring means (4, 5) is connected to at least one of said roller set drive means (6, 7), said regulator changing the driving power of said roller set drive means (6, 7) in the event of differences in the rotational speed of said wheels (1, 2) so that the rotational speed of said driven wheels is kept at an equal level.

**7.** The apparatus as claimed in claim 6, characterized in that said rotational speed measuring means has sensing rollers (9, 10) disposed on the periphery of said wheel (1, 2).

**8.** The apparatus as claimed in claim 6, characterized in that a mark (25) cooperating with a displacement or position sensor (26) is mounted on said wheels (1, 2) of said axle (3) of the brake to be tested.

**9.** The apparatus as claimed in claim 8, characterized in that said mark (25) is a reflector which supplies a light pulse to a sensor (26).

**Revendications**

**1.** Procédé de contrôle des freins de véhicules automobiles dotés de plusieurs essieux moteurs (3, 12) inamoviblement couplés entre eux, lesdits véhicules ayant un différentiel (14, 17) pour chaque essieu, procédé dans lequel les roues (1, 2) d'au moins un essieu, entraînées dans des sens inverses par les paires de rouleaux (19, 20) d'un banc d'essai de freins, sont freinées individuellement lors du contrôle et l'action de freinage de ce frein sur l'entraînement du jeu de rouleaux de cette roue est lue,
caractérisé
par le fait qu'au cours du processus de freinage la vitesse de rotation des roues entraînées est mesurée directement et est maintenue à une même valeur par commande des entraînements des jeux de rouleaux entraînant ces roues.

**2.** Procédé selon revendication 1, caractérisé par le fait que l'on mesure la vitesse périphérique des roues.

**3.** Procédé selon revendication 1, caractérisé par le fait que les vitesses angulaires des deux roues sont mesurées, comparées et utilisées pour la régulation de réajustement.

**4.** Procédé selon revendication 3, caractérisé par le fait que l'on applique sur les roues des marques tournantes dont on mesure le temps de rotation.

**5.** Procédé selon revendications 2 et 3, caractérisé par le fait que l'on applique la mesure d'angle de rotation de roue en plus de la mesure de vitesse périphérique qui détermine la vitesse de rotation, par exemple par des galets palpeurs.

**6.** Banc d'essai de freins, pour le contrôle des freins de véhicules automobiles ayant plusieurs essieux moteurs (3, 12) inamoviblement couplés entre eux, constitués par deux jeux de rouleaux (19, 20), ces jeux pouvant être entraînés dans des sens opposés, par un entraînement (6, 7) pour chaque jeu de rouleaux et par un dispositif de mesure (21, 22) conjugué à chaque entraînement de jeu de rouleaux, pour mesurer l'effet de freinage produit par le frein à contrôler,

caractérisé

par le fait qu'à chacune des deux roues (1, 2) de l'essieu concerné (3) est conjugué un dispositif de mesure de vitesse de rotation (4, 5) situé à part de l'entraînement (6, 7) du jeu de rouleaux; et

par le fait qu'au moins un régulateur couplé au dispositif de mesure de vitesse de rotation (4, 5) est relié à au moins l'un des entraînements (6, 7) des jeux de rouleaux, ce régulateur modifiant la puissance des entraînements (6, 7) des jeux de rouleaux lorsqu'il y a une différence entre les vitesses de rotation des roues (1, 2), de manière que la vitesse de rotation des roues entraînées soit maintenue à une même valeur.

7. Dispositif selon revendication 6, caractérisé par le fait que le dispositif de mesure de vitesse de rotation présente des galets palpeurs (9, 10) agencés contre la périphérie de la roue (1, 2).

8. Dispositif selon revendication 6, caractérisé par le fait qu'une marque (25) est fixée aux roues (1, 2) de l'essieu (3) du frein à contrôler, cette marque coopérant avec un capteur de déplacement ou de position (26).

9. Dispositif selon revendication 8, caractérisé par le fait que la marque (25) est un réflecteur envoyant une impulsion de lumière à un capteur (26).

FIG. 1

FIG. 2

EP 0 236 715 B1